(19) **Europäisches Patentamt**
European Patent Office
Office européen des brevets

(11) **EP 1 279 003 B1**

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(51) Int Cl.:
*G01C 21/28* (2006.01)   *G01C 21/30* (2006.01)

(21) Anmeldenummer: **01931444.2**

(22) Anmeldetag: **12.04.2001**

(86) Internationale Anmeldenummer:
**PCT/DE2001/001443**

(87) Internationale Veröffentlichungsnummer:
**WO 2001/084081 (08.11.2001 Gazette 2001/45)**

(54) **VERFAHREN ZUR POSITIONSBESTIMMUNG UND NAVIGATIONSGERÄT**

POSITION DETERMINATION METHOD AND NAVIGATION DEVICE

PROCEDE DE DETERMINATION DE POSITION ET APPAREIL DE NAVIGATION

(84) Benannte Vertragsstaaten:
**DE FR IT**

(30) Priorität: **02.05.2000 DE 10021373**

(43) Veröffentlichungstag der Anmeldung:
**29.01.2003 Patentblatt 2003/05**

(73) Patentinhaber: **Continental Automotive GmbH**
**30165 Hannover (DE)**

(72) Erfinder: **MOSIS, Torsten**
**93053 Regensburg (DE)**

(56) Entgegenhaltungen:
**EP-A- 0 276 366**   **EP-A- 0 393 935**
**EP-A- 0 471 405**   **GB-A- 2 126 040**
**US-A- 5 436 840**

**Beschreibung**

Die Erfindung betrifft ein Verfahren zur Positionsbestimmung mittels Abgleich einer durch Koppelnavigation ermittelten Position mit einer digitalen Straßenkarte und ein Navigationsgerät.

Aus der Patentschrift US 4,796,191 ist bekannt, eine durch Koppelnavigation ermittelte Position durch Vergleich mit Straßen einer digitalen Straßenkarte zu korrigieren. Hierzu wird ein Vergleich zwischen einer von einem Fahrzeug gefahrenen Richtung und der Richtung von Straßen einer digitalen Straßenkarte durchgeführt. Dadurch den Abgleich mit der digitalen Straßenkarte wird eine Summation der auftretenden Messfehler der Sensoren verhindert.

Ferner ist aus dem Patent US 5,394,333 ein Fahrzeugnavigationssystem bekannt, das zur Positionsbestimmung Koppelnavigation und Satellitennavigation (GPS) einsetzt. Eine durch Koppelnavigation errechnete Position wird auf eine Straßenkarte gezogen. Aus dem Unterschied zwischen der Position in der Straßenkarte und einer mittels GPS gefundenen Position wird ein Korrekturwert für die GPS-Navigation bestimmt.

Eine aussagekräftige Positionsbestimmung auf der digitalen Straßenkarte kann allerdings nur bei einer signifikanten Richtungsänderung des Fahrzeugs erfolgen, beispielsweise bei einem Abbiegemanöver.

Es ist ein Ziel der Erfindung, ein Verfahren zur Positionsbestimmung und eine Navigationsvorrichtung bereitzustellen, die bereits bei einer leichten Richtungsänderung eine präzise Position auf einer digitalen Straßenkarte bestimmen können.

Dieses Ziel wird mit einem Verfahren zur Positionsbestimmung und einem Navigationsgerät erreicht, wie sie in den unabhängigen Patentansprüchen definiert sind. Vorteilhafte Weiterbildungen der Erfindung sind Gegenstand der Unteransprüche.

Es werden Kurvenschwerpunkte für eine auf einer Straße durchlaufene Kurve, deren Verlauf mittels Koppelnavigation ermittelt wird, und für eine entsprechende Kurve auf einer Straße einer digitalen Straßenkarte ermittelt. Die Kurvenschwerpunkte sind auch bei lang gezogenen Kurven definierte Punkte, die für einen Abgleich der durch Koppelnavigation gemessenen Position mit der digitalen Straßenkarte zur Verfügung stehen. Solche lang gezogenen Kurven haben typischerweise einen Radius von 500 m bis 1000 m.

Als Basis für die Ermittlung der Kurvenschwerpunkte auf der Karte kann eine Zeitmessung oder eine Entfernungsmessung dienen.

Dient als Grundlage für die Bestimmung der Kurvenschwerpunkte eine Zeitmessung, so wird vorteilhafterweise die Durchschnittsgeschwindigkeit beim Durchfahren der Kurve zur Positionskorrektur eingesetzt.

Weitere Vorteile, Merkmale und Anwendungsmöglichkeiten der Erfindung ergeben sich aus der nachfolgenden Beschreibung von Ausführungsbeispielen in Verbindung mit den Zeichnungen. Es zeigen:

Figur 1     ein Fahrzeugnavigationssystem,

Figur 2     eine in einer digitalen Straßenkarte verzeichnete Kurve, und

Figur 3     einen Kurvenschwerpunkt, der auf Grundlage des ge- messenen Wegs bestimmt wurde, und eine Kurvenschwer- punkt, der auf Grundlage der entsprechenden Kurve der digitalen Straßenkarte bestimmt wurde.

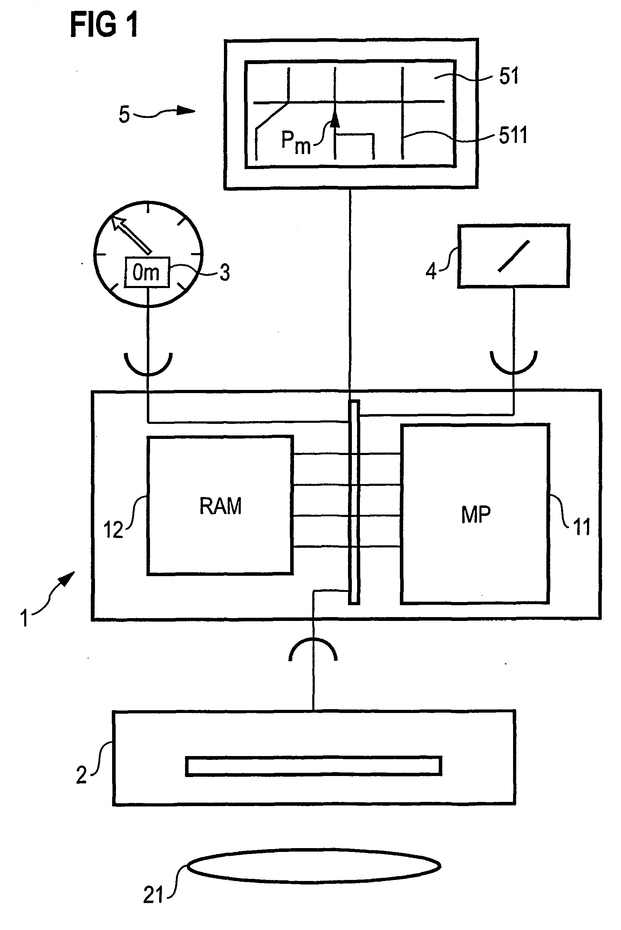

Figur 1 zeigt ein in einem Kraftfahrzeug eingesetztes autonomes Navigationssystem 1. Dieses weist eine Recheneinheit oder einen Prozessor 11 mit einem Arbeitsspeicher 12 auf.

Der Prozessor 11 hat Zugriff auf ein Laufwerk 2 für einen als DVD (Digital Versatile Disk) ausgebildeten Kartenspeicher 21. Auf diesem Speichermedium ist eine Datenbank in Form einer digitalen Straßenkarte 51 gespeichert.

Ferner ist der Prozessor 11 mit einem Entfernungssensor 3, bei dem es sich um einen Odometer (Tachometer) handelt, und mit einem Richtungssensor 4 verbunden. Der Richtungssensor 4 ist ein Gyroskop.

Zusätzlich ist der Prozessor 11 mit einem nicht dargestellten Satellitenempfänger verbunden. Dessen Signale werden ebenfalls zur Positionsermittlung eingesetzt. Der Satellitenempfänger kann auch alleine die Aufgabe des Entfernungssensors 3 und des Richtungssensors 4 übernehmen.

Aufgrund der von den Sensoren und dem Kartenspeicher 21 berechnet der Prozessor 11 eine Fahrzeugposition und gibt diese an eine Anzeigeeinrichtung 5 in Form eines Pfeilsymbols aus. Die Fahrzeugposition wird auf einer digitalisierten Straße 511 der digitalen Straßenkarte 51 dargestellt.

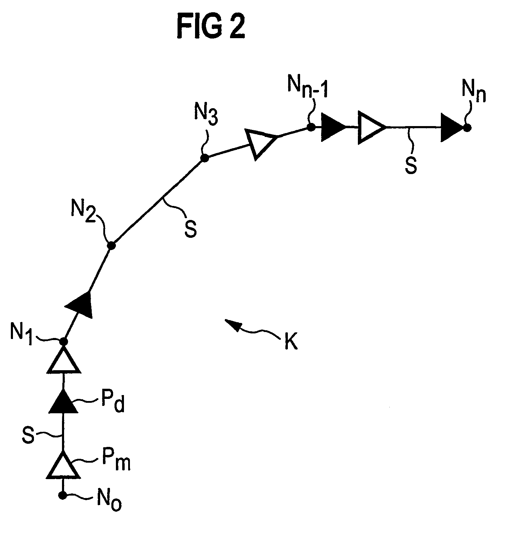

In Figur 2 ist eine in der digitalen Straßenkarte gespeicherte, lang gestreckte Kurve K mit einem Radius von 750 m veranschaulicht. Diese Kurve K ist ein Abschnitt einer digitalisierten Straße, die durch Knoten (Nodes) definiert ist. Diese Knoten beschreiben regelmäßig Straßenkreuzungen und beinhalten Angaben über die Entfernung und die Richtung zum nächsten Knoten. Kurvenverläufe werden ebenfalls durch aufeinanderfolgende Knoten definiert. Diese werden im allgemeinen als Gestaltungspunkte (Shape Points) bezeichnet.

Der Verlauf der dargestellten Kurve wird durch die Gestaltungspunkte $N_o$ bis $N_n$ definiert. Zwischen zwei Knoten oder Gestaltungspunkten erstreckt sich jeweils ein Straßensegment S.

In die Kurve K sind mehrere Fahrzeugpositionen während des Befahrens der Kurve eingetragen. Dabei bezeichnen $P_d$ eine durch Koppelnavigation aufgrund von Entfernungsmessungen und Richtungsmessungen auf der digitalen Straßenkarte ermittelte Position und $P_m$ eine tatsächliche, wirkliche Position, die dem Navigationsgerät zunächst unbekannt ist.

Aus der Darstellung ergibt sich, dass aufgrund eines Längenfehlers, die berechnete Position $P_d$ vor der realen Position $P_m$ angenommen wird. Zu einem ersten Zeitpunkt befinden sich beide Positionen $P_d$ und $P_m$ auf dem Straßensegment S zwischen den Gestaltungspunkten $N_0$ und $N_1$. Zu einem zweiten Zeitpunkt befindet sich das Fahrzeug in Wirklichkeit noch in demselben Straßensegment S, während nach der fehlerhaften Längenmessung das Fahrzeug bereits eine Kurvenfahrt zwischen den Gestaltungspunkten $N_1$ und $N_2$ beschreiben müsste. Am Ende der Kurve K befindet sich das Fahrzeug in Wirklichkeit noch in der Kurve, während das Fahrzeug nach der vom Entfernungsmesser gemessenen Entfernung oder Distanz die Kurve bereits verlassen haben müsste.

Der Kurvenverlauf weist keine signifikante Richtungsänderung innerhalb weniger Meter auf, so dass eine eindeutige Zuordnung eines Punkts der gemessenen, durchlaufenen Kurve zu einem Punkt der digitalisierten Kurve der digitalen Straßenkarte nicht möglich ist. Es ist jedoch möglich, aufgrund eines Vergleichs zwischen den vom Richtungssensor ausgegebenen Winkeländerungen und der Ausrichtung der Straßensegmente S festzustellen, ob die vom Navigationsgerät berechnete Position $P_d$ der wahren Position voraus eilt oder hinterher hinkt.

Um dennoch eine eindeutige punktuelle Zuordnung zwischen dem gemessenen Pfad und der digitalen Straßenkarte vorzunehmen, wird der Kurvenschwerpunkt des gemessenen Pfads aus den Messwerten der Sensoren und der Kurvenschwerpunkt der in der digitalen Straßenkarte verzeichneten Kurve K aus der Ausrichtung der Straßensegmente S ermittelt.

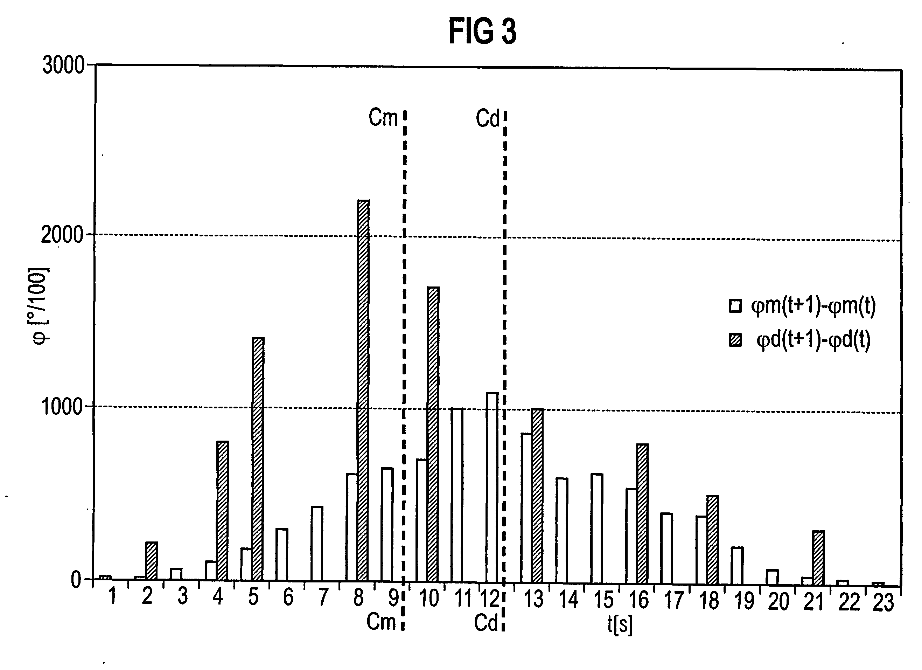

Figur 3 zeigt ein Diagramm, in dem über eine Zeitachse die diskreten Winkeländerungen $\Delta\varphi$ sowohl entsprechend den Sensormesswerten (weiße Balken) als auch entsprechend einer digitalen Straßenkarte aufgetragen sind. Außerdem sind die Kurvenschwerpunkte $C_d$ und $C_m$ für die gemessene Kurve und für die digitalisierte Kurve der Straßenkarte aufgetragen.

Der Kurvenschwerpunkt $C_d$ des durchfahrenen Pfads wird ermittelt, indem die einzelnen Richtungsänderungen $\Delta\varphi$ aus aufeinanderfolgenden Richtungsmessungen gewonnen und jeweils mit der verstrichenen Zeit t gewichtet und addiert werden. Diese Summe wird dann durch die Summe der gemessenen Richtungsänderungen dividiert.

Der Kurvenschwerpunkt $C_m$ der in der digitalen Straßenkarte verzeichneten Kurve wird ermittelt, indem die Differenzen der Winkel $\Delta\varphi$ aufeinanderfolgender Straßensegmente in ihrer Aufeinanderfolge mit der jeweils verstrichenen Zeit t gewichtet werden, die beim Verfolgen der Straßensegmente auf der digitalen Straßenkarte verstrichen ist. Die so erhaltenen Werte werden addiert. Diese Summe wird durch die Summe der Differenzen der Winkel $\Delta\varphi$ der aufeinanderfolgenden Straßensegmente dividiert.

Es gilt:

$$Cd = \frac{\sum_{i=0}^{n} i*(\varphi_{d,i+1}-\varphi_{d,i})}{\sum_{i=0}^{n}(\varphi_{d,i+1}-\varphi_{d,i})} \quad \text{und} \quad Cm = \frac{\sum_{i=0}^{n} i*(\varphi_{m,i+1}-\varphi_{m,i})}{\sum_{i=0}^{n}(\varphi_{m,i+1}-\varphi_{m,i})}$$

wobei:

| | |
|---|---|
| i | diskreter Zeitpunkt, |
| n | Anzahl der diskreten Zeitpunkte (Kurvendauer), |
| $\varphi_{d,i}$ | gemessene Ausrichtung des Fahrzeugs zum Zeitpunkt i, |
| $\varphi_{m,i}$ | Ausrichtung des Straßensegments zum Zeitpunkt i, |
| $C_d$ | Kurvenschwerpunkt der vom Fahrzeug durchlaufenen Kurve, und |
| $C_m$ | Kurvenschwerpunkt der Kurve der digitalisierten Straße. |

Die Kurvenschwerpunkte $C_d$ und $C_m$, bei denen es sich um Zeitpunkte handelt, werden anschließend in eine Wegdifferenz oder Distanz umgerechnet, mit der die Entfernungsmessung korrigiert wird. Da die Geschwindigkeit während einer Kurvendurchfahrt häufig nicht konstant ist, wird hierzu eine Durchschnittsgeschwindigkeit verwendet. Diese wird dann mit dem zeitlichen Abstand $(C_d-C_m)$ zwischen den Kurvenschwerpunkten multipliziert.

Die Wegdifferenz, also der Längenfehler oder Korrekturwert lässt sich wie folgt berechnen:

$$\delta s = (Cd - Cm) * \frac{\sum_{i=1}^{n} v_i}{n} \quad,$$

wobei

i     diskreter Zeitpunkt,

n     Anzahl der diskreten Zeitpunkte (Kurvendauer),

$C_d$     Kurvenschwerpunkt der vom Fahrzeug durchlaufenen Kurve,

$C_m$     Kurvenschwerpunkt der Kurve der digitalisierten Straße,

$v_i$     Geschwindigkeit zum Zeitpunkt i, und

$\delta_s$     Distanz zwischen der gemessenen und der tatsächli- chen Position.

Werden die Kurvenschwerpunkte dagegen auf Grundlage des zurückgelegten, vom Entfernungssensor gemessenen Wegs bestimmt, so erhält man den Längenfehler unmittelbar aus der Differenz der Kurvenschwerpunkte.

Die berechnete Distanz $\delta_s$ wird in mehrere Teilstrecken geteilt und nacheinander zu der jeweils aufgrund der Sensordaten berechneten Position $P_d$ addiert beziehungsweise subtrahiert. Damit wird erreicht, dass die Position $P_d$ allmählich der tatsächlichen Position $P_m$ angenähert wird und eine sprunghafte Änderung der Darstellung in der Anzeigeeinrichtung vermieden wird.

**Patentansprüche**

1. Verfahren zur Positionsbestimmung mittels Abgleich einer durch Koppelnavigation ermittelten Position ($P_d$) mit einer digitalen Straßenkarte (51) mit den Schritten:

   - eine Aufeinanderfolge von durch Koppelnavigation ermittelten Positionen ($P_d$) wird auf digitalisierten Straßen (511) der digitalen Straßenkarte (51) verfolgt und Straßensegmenten (S) der digitalen Straßenkarte (51) zugeordnet,
   - beim Durchlaufen einer Kurve (K) wird der Kurvenschwerpunkt ($C_d$) der Kurve (K) aus Messwerten eines Richtungssensors (4) ermittelt,
   - aus der Ausrichtung von Straßensegmenten (S) einer digitalisierten Straße (511), die mit den ermittelten Positionen ($P_d$) korrespondiert, wird der Kurvenschwerpunkt ($C_m$) der Kurve (K) der digitalisierten Straße (511) ermittelt,
   - die durch Koppelnavigation ermittelte Position wird auf Grundlage der Differenz zwischen den ermittelten Kurvenschwerpunkten ($C_d$; $C_m$) korrigiert.

2. Verfahren nach Anspruch 1, **dadurch gekennzeichnet, dass** der Kurvenschwerpunkt ($C_m$) der in der digitalen Straßenkarte (51) verzeichneten Kurve (K) berechnet wird, indem die Differenzen der Winkel ($\Delta\varphi$) aufeinanderfolgender Straßensegmente (S) in ihrer Aufeinanderfolge gewichtet und addiert werden und die so ermittelte Summe durch die Summe der Differenzen der Winkel ($\Delta\varphi$) der aufeinanderfolgenden Straßensegmente (S) dividiert werden.

3. Verfahren nach dem vorhergehenden Anspruch, **dadurch gekennzeichnet, dass** die Differenzen der Winkel ($\Delta\varphi$) aus Gestaltungspunkten (N) bestimmt werden, die die Straßensegmente (S) der Kurve (K) definieren, und dass die Differenzen der Winkel ($\Delta\varphi$) mit dem zeitlichen Abstand gewichtet werden, der beim Verfolgen der Straßensegmente (S) auf der digitalen Straßenkarte (51) verstrichen ist.

4. Verfahren nach dem vorhergehenden Anspruch, **dadurch gekennzeichnet, dass** die Durchschnittsgeschwindigkeit beim Durchlaufen der Kurve (K) ermittelt wird, und dass der zeitliche Abstand zwischen dem Durchlaufen der Kurvenschwerpunkte ($C_d$; $C_m$) mit der Durchschnittsgeschwindikeit multipliziert wird, um die durch Koppelnavigation ermittelte Position ($P_d$) mit der so gewonnenen Distanz zu korrigieren.

5. Navigationsgerät, das aufweist:

- einen Entfernungssensor (3),
- einen Richtungssensor (4),
- einen Kartenspeicher (21) für eine digitale Straßenkarte (51),
- wenigstens einen Prozessor (11) zur Koppelnavigation, der mit dem Entfernungssensor (3), dem Richtungssensor (4) und dem Kartenspeicher (21) verbunden ist,

der beim Durchlaufen einer Kurve (K) deren Kurvenschwerpunkt ($C_d$) aus Messwerten des Richtungssensors (4) ermittelt,
der aus der Ausrichtung von Straßensegmenten (S) einer digitalisierten Straße (511), die mit den ermittelten Positionen ($P_d$) korrespondiert, den Kurvenschwerpunkt ($C_m$) der Kurve (K) der digitalisierten Straße (511) ermittelt, und
der die durch Koppelnavigation ermittelte Position auf Grundlage der Differenz zwischen den ermittelten Kurvenschwerpunkten ($C_d$; $C_m$) korrigiert.

## Claims

1. Position determination method operating by means of adjustment of a position ($P_d$) determined by dead reckoning with the aid of a digital road map (51), having the following steps:

   - a succession of positions ($P_d$) determined by dead reckoning is tracked on digitized roads (511) of the digital road map (51) and assigned to road segments (S) of the digital road map (51),
   - during traversal of a curve (K) the centroid (Cd) of the curve (K) is determined from measured values of a direction sensor (4),
   - the centroid (Cm) of the curve (K) of a digitized road (511) is determined from the alignment of road segments (S) of the digitized road (511) which corresponds to the determined positions (Pd), and
   - the position determined by dead reckoning is corrected on the basis of the difference between the determined curve centroids (Cd; Cm).

2. Method according to Claim 1, **characterized in that** the centroid ($C_m$) of the curve (K) recorded in the digital road map (51) is calculated by weighting differences in the angles ($\Delta\varphi$) of consecutive road segments (S) in their succession and adding them, and dividing the sum thus determined by the sum of the differences in the angles ($\Delta\varphi$) of the consecutive road segments (S).

3. Method according to the preceding claim, **characterized in that** the differences in the angles ($\Delta\varphi$) are determined from shape points (N) that define the road segments (S) of the curve (K), and **in that** the differences in the angles ($\Delta\phi$) are weighted with the time interval that has elapsed during tracking of the road segments (S) on the digital road map (51).

4. Method according to the preceding claim, **characterized in that** the average speed during traversal of the curve (K) is determined, and **in that** the time interval between the traversal of the curve centroids ($C_d$; $C_m$) is multiplied by the average speed in order to correct the position ($P_d$), determined by dead reckoning, with the distance thus obtained.

5. Navigation device which has:

   - a distance sensor (3),
   - a direction sensor (4),
   - a map memory (21) for a digital road map (51), and
   - at least one processor (11) for dead reckoning, which is connected to the distance sensor (3), the direction sensor (4) and the map memory (21),

   which during traversal of a curve (K) determines the centroid (Cd) of the latter from measured values of the direction sensor (4),
   which determines the centroid (Cm) of the curve (K) of the digitized road (511) from the alignment of road segments (S) of a digitized road (511) which corresponds to the determined positions (Pd), and which corrects the position determined by dead reckoning on the basis of the difference between the determined curve centroids (Cd; Cm).

**Revendications**

1. Procédé permettant de déterminer une position par ajustage d'une position ($P_d$) déterminée par navigation à l'estime avec une carte routière numérique (51), ledit procédé comportant les phases suivantes:

   - une succession de positions ($P_d$) déterminées par navigation à l'estime est repérée sur les routes numérisées (511) de la carte routière numérique (51) et affectée à des sections de routes (S) de la carte routière numérique (51),
   - lorsqu'un virage (K) est parcouru, le centre de gravité ($C_d$) du virage (K) est déterminé à partir de valeurs de mesure d'un détecteur de direction (4),
   - à partir de l'orientation des sections de routes (S) d'une route numérisée (511), qui correspond aux positions déterminées ($P_d$), on détermine le centre de gravité ($C_m$) du virage (K) de la route numérisée (511),
   - la position déterminée par navigation à l'estime est corrigée sur la base de la différence entre les centres de gravité ($C_d$; $C_m$) qui ont été déterminés.

2. Procédé selon la revendication 1, **caractérisé par le fait que** le centre de gravité ($C_m$) du virage (K) inscrit sur la carte routière numérisée (51) est calculé en pondérant et en additionnant, dans leur ordre de succession, les différences des angles ($\Delta\varphi$) de sections de routes (S) qui se succèdent et que la somme ainsi déterminée est divisée par la somme des différences des angles ($\Delta\varphi$) des sections de routes (S) qui se succèdent.

3. Procédé selon la revendication précédente, **caractérisé par le fait que** les différences des angles ($\Delta\varphi$) sont déterminées à partir de points de configuration (N) qui définissent les sections de routes (S) du virage (K) et que les différences des angles ($\Delta\varphi$) sont pondérées avec l'écart dans le temps qui s'écoule lors de la poursuite des sections de routes (S) sur la carte routière numérisée (51).

4. Procédé selon la revendication précédente, **caractérisé par le fait qu'**on détermine la vitesse moyenne lors du parcours du virage (K) et que l'écart dans le temps qui sépare le parcours des points de gravité ($C_d$; $C_m$) du virage est multiplié avec la vitesse moyenne pour corriger la position ($P_d$) déterminée par navigation à l'estime avec la distance ainsi obtenue.

5. Appareil de navigation qui comporte:

   - un détecteur de distance (3),
   - un détecteur de direction (4),
   - une mémoire des cartes (21) pour une carte routière numérisée (51),
   - au moins un processeur (11) pour la navigation à l'estime, lequel processeur est relié au détecteur de distance (3), au détecteur de direction (4) et à la mémoire des cartes (21),

   ledit processeur déterminant, lors du parcours d'un virage (K), son centre de gravité ($C_d$) à partir de valeurs de mesure du détecteur de direction (4),
   ledit processeur déterminant, à partir de l'orientation de sections (S) d'une route (511) numérisée, qui correspond aux positions ($P_d$) déterminées, le centre de gravité ($C_m$) du virage (K) de la route numérisée (511), et
   ledit processeur corrigeant la position déterminée par navigation à l'estime sur la base de la différence entre les points de gravité ($C_d$; $C_m$) du virage qui ont été déterminés.

# FIG 1

# FIG 2

# FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4796191 A
- US 5394333 A